# FASCICULE DE BREVET EUROPEEN

(11) **EP 0 491 407 B1**
(45) Date de publication et mention de la délivrance du brevet: **27.03.1996**
(21) Numéro de dépôt: 91202750.5
(22) Date de dépôt: 24.10.1991
(51) Int. Cl.: B07C 5/36, B07C 5/18

(54) **Dispositif de convoyage de produits, notamment de fruits, adapté pour effectuer un triage desdits produits en fonction de critères de sélection prédéterminés**
Fördereinrichtung für Produkte, insbesondere für Früchte, insbesondere geeignet zum Sortieren von diesen Produkten Gemäss definierten Auswahlkriterien
Conveying device for products, especially for fruits, adapted for sorting the said products according to predetermined features of selection

(30) Priorité: 19.12.1990 FR 9016519
(43) Date de publication de la demande: 24.06.1992
(73) Titulaire: MATERIEL POUR L'ARBORICULTURE FRUITIERE (M.A.F.), F-82001 Montauban Cédex (FR)
(72) Inventeur: Blanc, Philippe, 82000 Montauban (FR)
(74) Mandataire: Cabinet BARRE LAFORGUE & associés

(56) Documents cités:
- EP-A- 0 230 583
- EP-A- 0 273 313
- WO-A-89/08510
- US-A- 4 106 628
- US-A- 4 569 434

## Description

L'invention concerne un dispositif de convoyage de produits, notamment de fruits, adapté pour effectuer un triage desdits produits en fonction de critères de sélection prédéterminés.

De tels dispositifs de convoyage sont d'une utilisation courante pour le triage des fruits et sont notamment décrits dans les brevets US 4106628, US 4569434, GB 2143491 et GB 2126356. Ils se composent d'un convoyeur le long duquel sont répartis des supports pour les fruits, de postes de contrôle destinés à déterminer le poids et la couleur de ces fruits, et de zones de déchargement des fruits où ces derniers sont sélectivement déversés en fonction de paramètres de tri prédéterminés.

Malgré des avantages importants, ces dispositifs présentent toutefois trois inconvénients majeurs qui rendent leur fonctionnement imparfait et réduisent leur rendement. En premier lieu, ils ne permettent pas de peser les fruits pendant que ceux-ci sont chargés sur leur support. De plus, il s'avère que le taux de remplissage des convoyeurs, alimentés par exemple au moyen d'un tapis roulant, est relativement faible, de l'ordre généralement de 50 %. Enfin, aucun de ces dispositifs ne permet de garantir que les fruits vont être effectivement séparés les uns des autres sur le convoyeur, et ce d'autant plus que ces fruits peuvent être de forme et de taille diverses. Pour ces raisons, et dans la pratique, on amène les fruits les uns derrière les autres, et en petit nombre, vers le convoyeur, de façon à augmenter les chances d'obtenir la séparation de ces fruits en tête du convoyeur. Toutefois, cette façon de procéder abaisse notablement le rendement de ces dispositifs de convoyage.

Le premier des inconvénients précités relatif aux dispositifs de convoyage connus a été partiellement solutionné par le dispositif décrit dans le brevet EP 0273313. En effet, dans ce dispositif, les fruits sont portés par deux rouleaux montés oscillants verticalement dans des glissières verticales, ce qui permet de peser les fruits directement, la tare étant constituée par le poids des rouleaux. Toutefois, la précision du pesage est très relative car elle est subordonnée à une parfaite verticalité des glissières et à l'absence de frottements lors du déplacement vertical des rouleaux. Or, notamment concernant ce dernier point, le fruit reposant sur deux rouleaux engendre obligatoirement des forces de frottement qui, à elles seules, faussent systèmatiquement les mesures. Par ailleurs, ce dispositif de convoyage ne solutionne pas les inconvénients relatifs au faible taux de remplissage et à la séparation des fruits.

La présente invention vise à pallier les inconvénients des dispositifs de convoyage connus et a pour premier objectif de fournir un dispositif de convoyage permettant de relever avec précision les poids individuels des produits portés par les rouleaux du convoyeur.

Un autre objectif de l'invention est de fournir un dispositif de convoyage comportant des moyens de déchargement des produits favorisant la chute de ces derniers quelles que soient leurs formes.

A cet effet, l'invention vise un dispositif de convoyage de produits, notamment de fruits, adapté pour effectuer un triage desdits produits en fonction de critères de sélection prédéterminés, du type comprenant :
- un convoyeur pour le transport des produits, doté d'une zone de chargement desdits produits,
- une pluralité de rouleaux libres en rotation autour de leur axe, répartis le long du convoyeur et disposés transversalement par rapport au sens de défilement dudit convoyeur, de façon que deux rouleaux successifs définissent entre eux un logement pour un produit,
- des moyens supports des rouleaux aptes à permettre une oscillation selon un plan vertical et un basculement latéral desdits rouleaux, et comprenant une pluralité de châssis répartis le long du convoyeur et comportant un axe horizontal s'étendant parallèlement audit convoyeur,
- des moyens de pesage adaptés pour permettre de relever le poids des produits supportés par les rouleaux,
- et des moyens de basculement adaptés pour engendrer de façon sélective le basculement de deux rouleaux successifs en vue de décharger le produit disposé entre lesdits rouleaux.

Selon l'invention, ce dispositif de convoyage se caractérise en ce que :
- les moyens supports des rouleaux comprennent, supporté par chaque châssis, un chariot portant deux rouleaux délimitant entre eux un logement pour un produit, chacun desdits chariots :
   * étant monté sur l'axe d'un châssis de façon à pouvoir osciller verticalement et basculer latéralement par rapport audit châssis,
   * comportant des patins d'appui définissant au moins un plan horizontal de glissement ;
- les moyens de pesage comportent des glissières disposées chacune dans l'alignement d'un patin d'appui des chariots, lesdites glissières étant dotées d'une rampe d'extrémité adaptée pour entraîner un déplacement vers le haut des chariots relativement à leur châssis, et de zones de pesage desdits chariots,
- des moyens de séparation sont adaptés pour réaliser, au niveau de la zone de chargement des produits, un rangement ordonné desdits produits permettant de les déposer chacun sur un chariot.

Selon l'invention, les produits sont donc portés de façon individuelle sur des chariots possédant des patins d'appui qui permettent un glissement sur les glissières de pesage de telle sorte que ces chariots soient entraînés de manière flottante. Une telle définition permet un relevé précis du poids de l'ensemble chariot/rouleaux/produit qui n'est nullement affecté par les efforts de traction ou autre effort parasite de la mécanique de mouvement. En outre, cette conception permet de disposer de suffisamment de temps pour peser chaque chariot et effectuer une remise à zéro automatique des moyens de pesage entre deux chariots.

Selon un mode de réalisation préférentiel visant les moyens de pesage des produits :
- chaque chariot comprend quatre patins d'appui répartis latéralement et longitudinalement sous ledit chariot, lesdits patins étant décalés transversalement les uns par rapport aux autres,
- les moyens de pesage comprennent quatre glissières disposées chacune dans l'alignement d'un patin, lesdites glissières étant dotées de zones de pesage disposées de façon à supporter simultanément lesdits patins d'appui.

Selon une autre caractéristique de l'invention, le convoyeur s'étend, au niveau de sa zone de chargement, selon une rampe inclinée ascendante, et les moyens de séparation comprennent :
. pour chaque chariot, un galet intermédiaire parallèle aux rouleaux et disposé de façon à s'étendre entre les paires de rouleaux de deux chariots successifs,
. des moyens d'entraînement en rotation des rouleaux, disposés le long de la zone de chargement et adaptés pour entraîner en rotation lesdits rouleaux, en sens inverse du sens de défilement du convoyeur, avec une vitesse linéaire de rotation supérieure à celle dudit convoyeur.

Les rouleaux sont donc entraînés en rotation de façon que les produits amenés eux-mêmes à tourner, recherchent naturellement des espaces stables entre deux rouleaux, repoussant vers l'arrière le produit en trop qui devra donc trouver un espace libre sur les chariots suivants. En outre, le galet intermédiaire permet de ne pas créer un espace stable entre les rouleaux de deux chariots consécutifs. En effet, tout produit situé dans cette zone et animé d'un mouvement de rotation, ne peut y demeurer de façon stable et choisit obligatoirement un espace centré sur le chariot suivant. Ce phénomène de séparation est, par ailleurs, accentué par l'inclinaison ascendante du convoyeur dans sa zone de chargement.

Selon une autre caractéristique de l'invention :
- chaque châssis comporte une platine apte à être fixée latéralement sur le convoyeur, et un bras support sensiblement horizontal, s'étendant orthogonalement par rapport à ladite platine et portant un axe horizontal parallèle au convoyeur, ledit axe comportant un ergot à chacune de ses extrémités,
- chaque chariot comporte une platine présentant une face arrière évidée définissant un rebord supérieur par lequel elle vient en appui sur la platine du châssis, et deux traverses sensiblement horizontales, s'étendant orthogonalement par rapport à ladite platine, sous chacune desquelles est agencée une fenêtre oblongue à grand axe vertical apte à loger un ergot.

Cette conception permet avantageusement de réaliser un dispositif de convoyage de capacité double, comprenant deux séries de châssis fixés en vis-à-vis de part et d'autre du convoyeur.

Par ailleurs, les moyens de basculement comprennent, de façon préférentielle :
- une came dotée d'une rampe d'accès et disposée parallèlement par rapport au convoyeur,
- pour chaque chariot, un talon faisant saillie sous ledit chariot et agencé pour passer latéralement le long de la came,
- et des moyens d'aiguillage aptes à dévier la trajectoire des talons des chariots et à les amener sur la rampe d'accès de la came.

Ces moyens d'aiguillage comprennent, quant à eux, préférentiellement : un levier doté d'un face supérieure conjuguée de la rampe d'accès de la came, et des moyens de pivotement de ce levier entre une position où il se trouve écarté de la came de façon à permettre le passage des talons des chariots, et une position où il se trouve accolé à la came, sur la trajectoire desdits talons.

En outre, selon une autre caractéristique de l'invention, ces moyens de basculement comprennent, avantageusement, un élément d'appui disposé parallèlement à la came de façon que l'extrémité des rouleaux vienne en appui sur ledit élément lorsque les chariots sont basculés par ladite came.

Un tel élément d'appui génère une mise en rotation des rouleaux et favorise donc la chute de produits et ce, quelles que soient leurs formes.

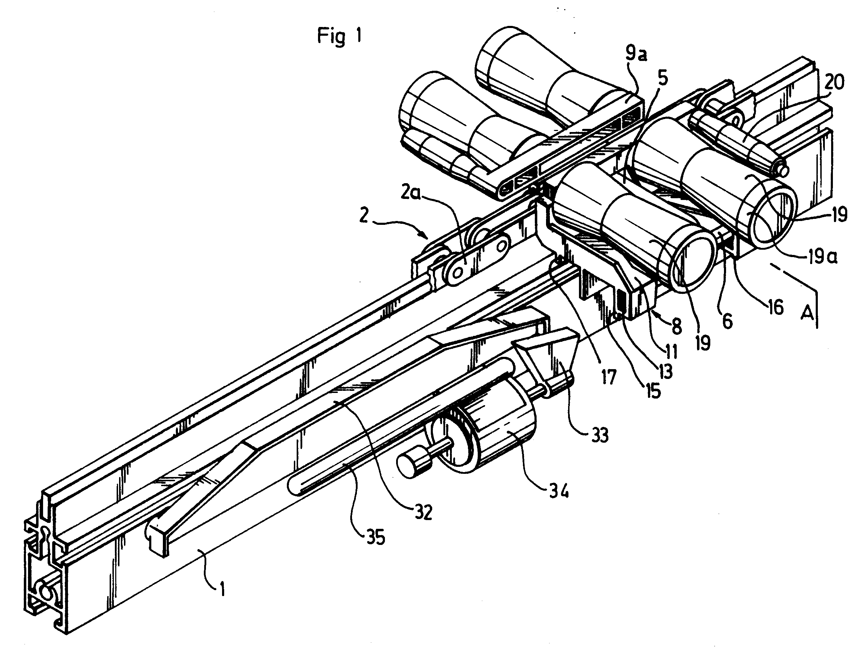

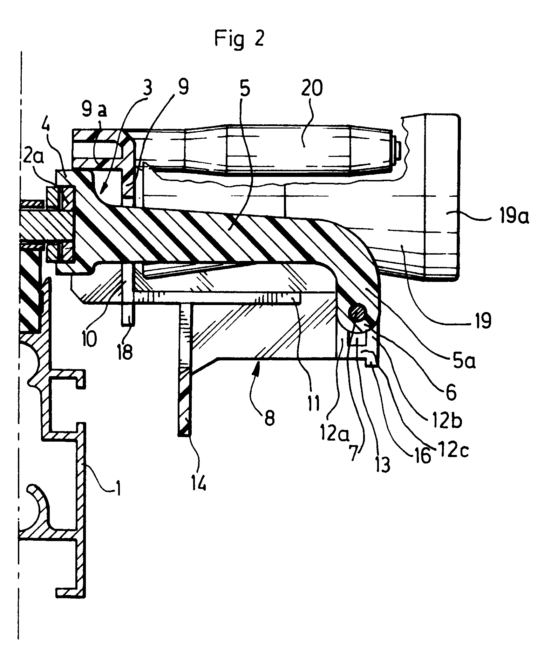

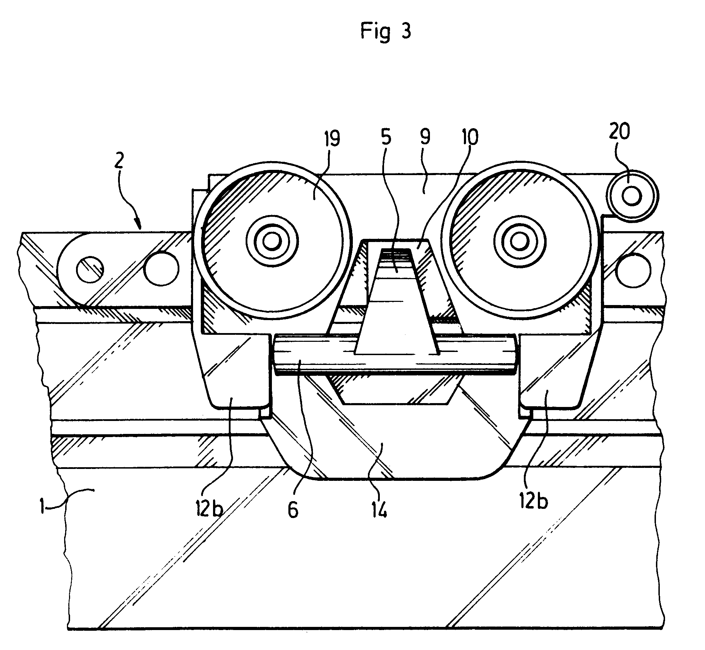

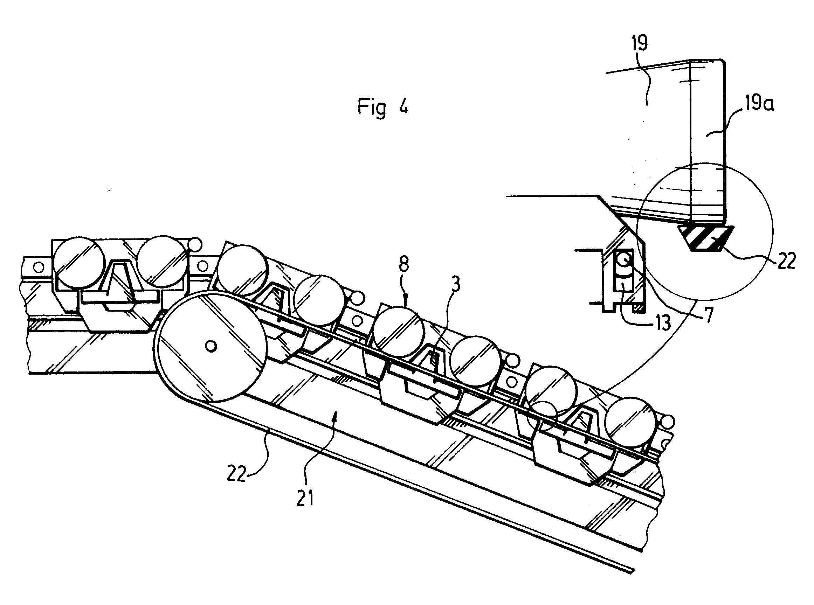

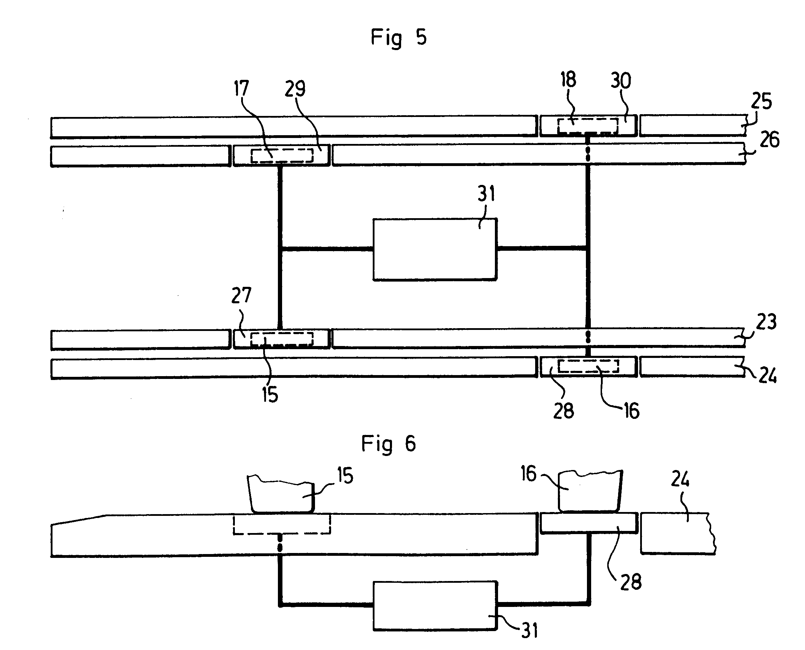

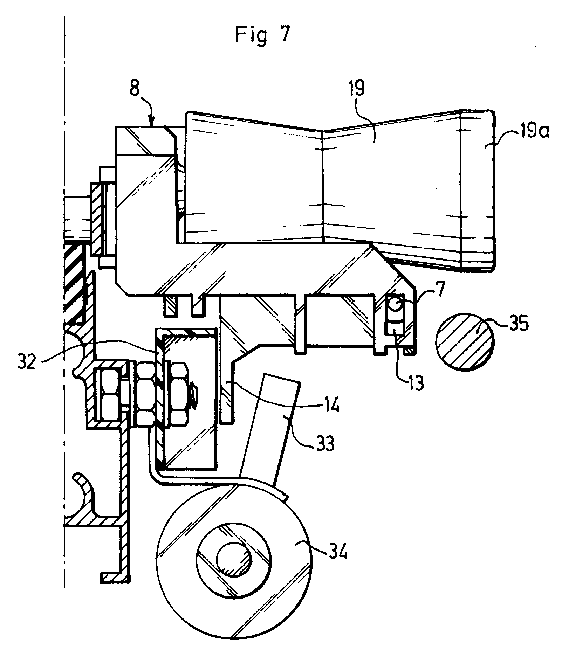

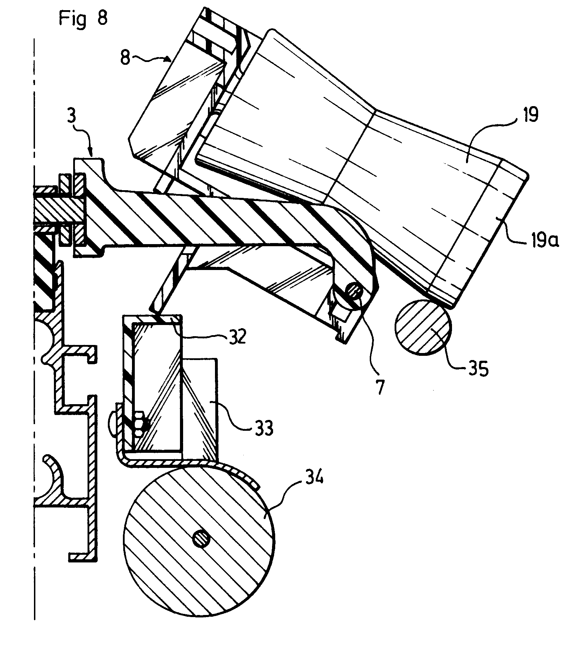

D'autres caractéristiques, buts et avantages de l'invention ressortiront de la description détaillée qui suit en référence aux dessins annexés qui en représentent, à titre d'exemple non limitatif, un mode de réalisation préférentiel. Sur ces dessins qui font partie intégrante de la présente description :
. la figure 1 est une vue en perspective d'un tronçon de dispositif de convoyage conforme à l'invention,
. la figure 2 en est une coupe transversale par un plan vertical A,
. la figure 3 en est une vue latérale partielle,
. la figure 4 est une vue latérale partielle de la zone de chargement de ce dispositif de convoyage, avec un détail représenté à échelle agrandie,
. la figure 5 est une vue de dessus schématique des moyens de pesage de ce dispositif de convoyage,
. la figure 6 est une vue latérale schématique de ces moyens de pesage,
. la figure 7 est une coupe transversale par un plan vertical illustrant les moyens de déchargement des chariots, dans la position passive de ces derniers,
. la figure 8 est une coupe transversale par un plan vertical illustrant les moyens de déchargement des chariots, dans la position active de ces derniers,

Le dispositif représenté aux figures constitue un dispositif de convoyage adapté pour effectuer un triage de produits tels que fruits ou légumes en fonction de critères de sélection prédéterminés tels que le poids et la couleur de ces derniers.

Ce dispositif comprend un convoyeur comportant une portion active horizontale le long de laquelle les produits sont transportés au moyen d'une chaîne sans fin 2 supportée, dans cette portion active, par un profilé 1.

Ce convoyeur est équipé d'une pluralité de châssis 3 répartis uniformément le long de la chaîne et fixés deux à deux en vis-à-vis de part et d'autre de ladite chaîne.

Chacun de ces châssis 3 comporte, en premier lieu, une platine 4 évidée sur sa face arrière de façon à venir coiffer latéralement une des joues d'un maillon 2a de la chaîne 2. Les platines 4 ainsi que les joues des maillons 2a sont percées d'un orifice permettant de fixer sur la chaîne 2 deux châssis en vis-à-vis au moyen d'une vis et d'un écrou (non représentés).

Les châssis 3 comprennent, en outre, un bras support 5 sensiblement horizontal s'étendant orthogonalement par rapport à la platine 4. Ces bras supports 5 présentent une extrémité 5a recourbée vers le bas, se prolongeant par un axe horizontal 6 s'étendant orthogonalement par rapport audit bras, et par conséquent, parallèlement par rapport au convoyeur. Cet axe 6 est, en outre, doté d'un ergot 7 à chacune de ses extrémités.

Chacun de ces châssis 3 sert de support à un chariot 8 adapté pour pouvoir osciller verticalement et basculer latéralement par rapport audit châssis.

Ces chariots 8 comprennent, en premier lieu, une platine 9 présentant une face arrière évidée définissant un rebord supérieur 9a par lequel elle vient en appui sur la platine 4 d'un châssis. Cette platine 9 est, en outre, dotée d'une fenêtre 10 au-travers de laquelle s'étend le bras 5 du châssis 3.

Chaque chariot 8 comprend également de part et d'autre de la fenêtre 10, deux traverses horizontales 11 s'étendant orthogonalement par rapport à la platine 9. Chacune de ces traverses 11 comporte vers son extrémité libre, deux ailettes verticales 12a, 12b espacées s'étendant en sous face desdites traverses. Ces deux ailettes 12a, 12b reliées au niveau de leur extrémité inférieure par une âme horizontale 12c définissent un logement oblong 13 à grand axe vertical, dans lequel viennent s'insérer les ergots 7 du châssis, par simple déformation élastique des traverses 11.

Les chariots 8 comprennent, en outre, un talon 14 se présentant sous la forme d'une plaque verticale en forme de "U" parallèle à la platine 9, et reliant les sous faces des traverses 11.

Ces chariots 8 sont, par ailleurs, pourvus de quatre patins d'appui 15, 16, 17, 18, décalés transversalement les uns par rapport aux autres. Deux de ces patins sont constitués par des pattes s'étendant dans le prolongement inférieur d'une des ailettes 12a, 12b et définissant un premier plan horizontal de glissement : le premier 15 constitue le prolongement inférieur de l'ailette 12a s'étendant sous une des traverses 11, et le second 16, le prolongement inférieur de l'ailette 12b s'étendant sous l'autre traverse 11. Ces deux patins 15, 16 sont donc décalés transversalement d'une distance équivalent à la largeur du logement 13.

Les deux autres patins 17, 18 s'étendent également chacun sous une traverse 11, mais côté platine 9, et définissent un deuxième plan horizontal de glissement décalé vers le haut par rapport au premier plan. Un de ces patins 18 est constitué d'une patte s'étendant dans le prolongement inférieur de la platine 9. L'autre patin 17 est constitué d'une patte décalée transversalement par rapport au patin 18 d'une distance identique à celle séparant les deux premiers patins 15, 16.

Chacun des chariots 8 porte deux rouleaux horizontaux 19 disposés chacun sensiblement au-dessus d'une traverse 11, et montés libres en rotation autour d'un axe s'étendant orthogonalement par rapport à la platine. Chacun de ces rouleaux 19 présente une forme biconique concave, et comporte, au niveau de son extrémité opposée à la platine 9, un tronçon de faible largeur 19a de forme cylindrique.

Enfin, les chariots 18 comportent un galet intermédiaire 20 constitué d'un doigt cylindrique horizontal monté libre en rotation autour d'un axe s'étendant orthogonalement par rapport à la platine 9.

Ce galet 20 est disposé de façon à s'étendre dans l'espace compris entre les paires de rouleaux 19 de deux chariots successifs. Il est disposé de façon que sa génératrice supérieure soit située dans un plan horizontal intermédiaire par rapport aux plans horizontaux passant par les points extrêmes d'appui des rouleaux 19.

Cet ensemble châssis 3-chariot 8 est donc agencé pour que ledit chariot 8 puisse, d'une part, osciller verticalement par rapport audit châssis en raison de la forme oblongue des logements 13, et d'autre part, basculer latéralement par rotation autour de l'axe 6 entre deux positions : une position de transport dans laquelle la platine 9 repose sur la platine 4 par son rebord supérieur 9a, et où les axes des rouleaux 19 sont horizontaux, et une position où le talon 14 vient en butée inférieure sous le bras 5 et où les axes des rouleaux 19 sont inclinés.

Le dispositif de convoyage comporte, par ailleurs, une zone de chargement des produits ménagée vers une des extrémités du convoyeur et vers laquelle les produits sont délivrés par tout moyen connu en soi, tels que tapis roulant ou fruits flottant à la surface de l'eau.

Tel que représenté à la figure 4, au niveau de cette zone de chargement, le convoyeur s'étend selon une rampe inclinée ascendante 21 définissant un plan de treize degrés par rapport à l'horizontale.

En outre, le long de cette rampe 21, et parallèlement au convoyeur, est disposée une courroie trapézoïdale sans fin agencée pour que les rouleaux 19 prennent appui sur ladite courroie par leur tronçon d'extrémité cylindrique 19a. Cette courroie 22 entraînée en sens opposé au sens de défilement du convoyeur, et à une vitesse linéaire supérieure à celle dudit convoyeur, engendre une rotation des rouleaux 19 et par conséquent des produits reposant sur ces rouleaux. De ce fait, ces produits sont amenés à se déposer naturellement dans les espaces stables situés entre les rouleaux 19 des chariots 8, les galets intermédiaires 20 évitant, en outre, qu'un produit ne demeure en position stable entre deux chariots.

Le dispositif de convoyage comporte, en outre, un poste de pesage situé en aval de la zone de chargement et destiné à assurer le pesage de chaque chariot 19.

Tel que représenté aux figures 5 et 6, ce poste de pesage comporte quatre glissières 23, 24, 25, 26 s'étendant parallèlement au convoyeur de façon à se trouver chacune dans l'alignement d'un des patins d'appui 15, 16, 17, 18 des chariots 8.

Ces glissières 23-26 comportent une rampe d'accès qui permet d'engendrer un déplacement vers le haut des chariots 8 relativement aux châssis 3 de telle sorte que ces chariots 8 se déplacent sur ces glissières en étant entraînés de manière flottante.

Ces glissières 23-26 comportent, en outre, chacune une zone de pesage 27-30, ces dernières étant disposées de façon à supporter simultanément les patins d'appui 15-18 des chariots 8. Ces zones de pesage sont reliées à une cellule de pesage 31 de façon connue en soi, de façon à permettre un relevé précis du poids des chariots 8 et des produits portés par la paire de rouleaux 19 de ces chariots.

Le dispositif de convoyage comprend, par ailleurs, des postes de déchargement permettant d'évacuer les produits portés par les chariots 8 par exemple sur des convoyeurs annexes, en fonction des critères de sélection prédéterminés.

Tel que représenté aux figures 1, 7, 8, chaque poste d'aiguillage comprend en premier lieu une came 32 fixée latéralement sur le profilé 1 de façon à s'étendre parallèlement à ce dernier. Tel que représenté à la figure 7, la came 32 est, en outre, disposée de façon que le talon 14 des chariots 8 passe latéralement le long de ladite came lorsque l'aiguillage n'est pas activé.

Cette came 32 présente, enfin, une face supérieure de glissement horizontale prolongée à chacune de ses extrémités par une rampe inclinée descendante dont l'arête inférieure est située dans un même plan horizontal que la face inférieure des talons 14 des chariots 8.

Chaque poste d'aiguillage comporte, en outre, un levier 33 présentant une face supérieure conjuguée de la rampe d'accès de la came 32. Ce levier 33 est fixé sur l'axe de rotation d'un électro-aimant 34 adapté pour le faire pivoter entre deux positions : une position passive où il se trouve écarté de la came 32 et où il permet le passage des talons 14 des chariots 8, et une position active où il se trouve accolé à cette came 32 et où il forme un obstacle au passage des talons 14, entraînant la déviation desdits talons vers la rampe d'accès de la came 32.

Dans la position active de l'aiguillage, le talon 14 des chariots 8 est donc amené à glisser sur la came entraînant le basculement latéral desdits chariots, et par conséquent le déchargement des produits portés par ces derniers.

Tel que représenté à la figure 8 et afin de favoriser la chute de ces produits, chaque poste d'aiguillage est, en outre, doté d'un tube horizontal d'appui 35 disposé parallèlement au convoyeur de façon que le tronçon cylindrique 19a des rouleaux vienne en appui sur ledit tube. De ce fait, les rouleaux 19 sont amenés à tourner autour de leur axe de rotation et les produits sont plus facilement évacues.

Le dispositif de convoyage comprend, enfin, de façon connue en soi, des moyens tel qu'une unité centralisée de gestion, adaptés notamment pour repérer la position de chaque produit transporté le long du convoyeur, générer des signaux représentatifs du poids de ces produits relevé au poste de pesage, comparer ces signaux avec des paramètres prédéterminés, et commander l'activation de l'aiguillage correspondant.

De plus, ce dispositif de convoyage peut être doté de tout moyen connu en soi permettant, en outre, un tri des objets en fonction de leur aspect externe.

## Revendications

1. Dispositif de convoyage de produits, notamment de fruits, adapté pour effectuer un triage desdits produits en fonction de critères de sélection prédéterminés, du type comprenant :
- un convoyeur (1, 2) pour le transport des produits, doté d'une zone de chargement (21) desdits produits,
- une pluralité de rouleaux (19) libres en rotation autour de leur axe, répartis le long du convoyeur (1, 2) et disposés transversalement par rapport au sens de défilement dudit convoyeur, de façon que deux rouleaux (19) successifs définissent entre eux un logement pour un produit,
- des moyens supports (3, 8) des rouleaux (19) aptes à permettre une oscillation selon un plan vertical et un basculement latéral desdits rouleaux, et comprenant une pluralité de châssis (3) répartis le long du convoyeur (1, 2) et comportant un axe horizontal (6) s'étendant parallèlement audit convoyeur,
- des moyens de pesage (23-31) adaptés pour permettre de relever le poids des produits supportés par les rouleaux (19),
- et des moyens de basculement (32-34) adaptés pour engendrer de façon sélective le basculement de deux rouleaux successifs en vue de décharger le produit disposé entre lesdits rouleaux ;
ledit dispositif de convoyage étant caractérisé en ce que :
- les moyens supports des rouleaux (19) comprennent, supporté par chaque châssis (3), un chariot (8) portant deux rouleaux (19) délimitant entre eux un logement pour un produit, chacun desdits chariots :
* étant monté sur l'axe (6) d'un châssis (3) de façon à pouvoir osciller verticalement et basculer latéralement par rapport audit châssis,
* comportant des patins d'appui (15-18) définissant au moins un plan horizontal de glissement ;
- les moyens de pesage comportent des glissières (23-26) disposées chacune dans l'alignement d'un patin d'appui (15-18) des chariots (8), lesdites glissières étant dotées d'une rampe d'extrémité adaptée pour entraîner un déplacement vers le haut des chariots (8) relativement à leur châssis (3), et de zones de pesage (27-31) desdits chariots,
- des moyens de séparation (20, 22) sont adaptés pour réaliser, au niveau de la zone de chargement (21) des produits, un rangement ordonné desdits produits permettant de les déposer chacun sur un chariot (8).

2. Dispositif de convoyage selon la revendication 1 caractérisé en ce que :
- le convoyeur (1, 2) s'étend, au niveau de sa zone de chargement, selon une rampe inclinée ascendante (21),
- les moyens de séparation comprennent :
. pour chaque chariot (8), un galet intermédiaire (20) parallèle aux rouleaux (19) et disposé de façon à s'étendre entre les paires de rouleaux (19) de deux chariots (8) successifs,
. des moyens (22) d'entraînement en rotation des rouleaux (19), disposés le long de la zone de chargement (21) et adaptés pour entraîner en rotation lesdits rouleaux, en sens inverse du sens de défilement du convoyeur (1, 2), avec une vitesse linéaire de rotation Supérieure à celle dudit convoyeur.

3. Dispositif de convoyage selon la revendication 2 caractérisé en ce que les moyens d'entraînement en rotation des rouleaux (19) comprennent une courroie sans fin (22) agencée pour venir au contact desdits rouleaux.

4. Dispositif de convoyage selon la revendication 3 caractérisé en ce que chaque rouleau (19) présente une forme biconique concave et comporte un tronçon d'extrémité (19a) de forme cylindrique agencé pour prendre appui sur la courroie sans fin (22).

5. Dispositif de convoyage selon l'une des revendications précédentes caractérisé en ce que :
- chaque châssis (3) comporte une platine (4) apte à être fixée latéralement sur le convoyeur (1, 2), et un bras support (5) sensiblement horizontal, s'étendant orthogonalement par rapport à ladite platine et portant un axe horizontal (6) parallèle au convoyeur (1, 2), ledit axe comportant un ergot (7) à chacune de ses extrémités,
- chaque chariot (8) comporte une platine (9) présentant une face arrière évidée définissant un rebord supérieur par lequel elle vient en appui sur la platine (4) du châssis (3), et deux traverses (11) sensiblement horizontales, s'étendant orthogonalement par rapport à ladite platine, sous chacune desquelles est agencée une fenêtre oblongue (13) à grand axe vertical apte à loger un ergot (7).

6. Dispositif de convoyage selon la revendication 5 caractérisé en ce qu'il comprend deux séries de châssis (3) fixés en vis-à-vis de part et d'autre du convoyeur (1, 2).

7. Dispositif de convoyage selon l'une des revendications précédentes caractérisé en ce que :
- chaque chariot (8) comprend quatre patins d'appui (15-18) répartis latéralement et longitudinalement sous ledit chariot, lesdits patins étant décalés transversalement les uns par rapport aux autres,
- les moyens de pesage comprennent quatre glissières (23-26) disposées chacune dans l'alignement d'un patin (15-18), lesdites glissières étant dotées de zones de pesage (27-30) disposées de façon à supporter simultanément lesdits patins d'appui.

8. Dispositif de convoyage selon l'une des revendications précédentes caractérisé en ce que les moyens de basculement comprennent :
- une came (32) dotée d'une rampe d'accès et disposée parallèlement par rapport au convoyeur (1, 2),
- pour chaque chariot (8), un talon (14) faisant saillie sous ledit chariot et agencé pour passer latéralement le long de la came (32),
- et des moyens d'aiguillage (33, 34) aptes à dévier la trajectoire des talons (14) des chariots (8) et à les amener sur la rampe d'accès de la came (32).

9. Dispositif de convoyage selon la revendication 8 caractérisé en ce que les moyens d'aiguillage comprennent un levier (33) doté d'un face supérieure conjuguée de la rampe d'accès de la came (32), et des moyens de pivotement (34) de ce levier entre une position où il se trouve écarté de la came (32) de façon à permettre le passage des talons (14) des chariots (8), et une position où il se trouve accolé à la came (32), sur la trajectoire desdits talons.

10. Dispositif de convoyage selon la revendication 9 caractérisé en ce que les moyens de pivotement comprennent un électro-aimant (34) doté d'un axe de rotation portant le levier (33).

11. Dispositif de convoyage selon l'une des revendications 8 à 10 caractérisé en ce qu'il comprend un élément d'appui (35) disposé parallèlement à la came (32) de façon que l'extrémité (19a) des rouleaux (19) vienne en appui sur ledit élément lorsque les chariots (8) sont basculés par ladite came.

## Claims

1. Conveying device for products, especially fruits, adapted for sorting said products according to predetermined criteria of selection, of the type comprising:
- a conveyor (1, 2) for transporting products, endowed with a zone (21) for loading said products,
- a plurality of rollers (19) free to rotate about their axes, distributed along the conveyor (1, 2) and disposed transversely in relation to the direction in which said conveyor moves so as to ensure that two successive rollers (19) define amongst themselves a seat for one product,
- means (3, 8) for supporting the rollers (19), capable of permitting oscillation in a vertical plane and lateral tipping of said rollers and comprising a plurality of carriers (3) distributed along the conveyor (1, 2) and possessing a horizontal spindle (6) which is parallel to said conveyor,
- weighing means (23-31) so adapted as to enable the weight of products supported by the rollers (19) to be measured,
- and tipping means (32-34) so adapted as to bring about in selective fashion, tipping of two successive rollers with a view to discharging the product located between said rollers;
said conveying device being characterised in that:
- the means for supporting the rollers (19) comprise, supported by each carrier (3), a carriage (8) comprising two rollers (19) which delimit between themselves a seat for one product, whereby each of said carriages:
* is mounted on the spindle (6) of a carrier (3) so as to be capable of oscillating vertically and tipping laterally in relation to said carrier,
* comprises support shoes (15-18) defining at least one horizontal sliding plane;
- the weighing means comprise slides (23, 26) each of which is arranged in alignment with one support shoe (15-18) of carriages (8), said slides being provided with an end ramp adapted to bring about an upward displacement of the carriages (8) in relation to their carrier (3), as well as with weighing zones (27-31) for said carriages,
- separating means (20, 22) are adapted to bring about, at the level of the product loading zone (21), an ordered arrangement of said products so as to enable each of them to be deposited on a carriage (8).

2. Conveying device according to Claim 1, characterised in that:
- the conveyor (1, 2) extends, at the level of its loading zone, along an upward-sloping ramp (21),
- the separating means comprise:
. in respect of each carriage (8) an intermediate roller (20) which is parallel to the rollers (19) and so disposed as to extend between the pairs of rollers (19) of two successive carriages (8),
. means (22) for driving the rollers (19) in rotation, said means being disposed along the loading zone (21) and so adapted as to drive said rollers in rotation in the direction opposite to that in which the conveyor (1, 2) moves and at a linear speed of rotation which is higher than that of said conveyor.

3. Conveying device according to Claim 2, characterised in that the means for driving the rollers (19) in rotation comprise a continuous belt (22) so arranged as to come into contact with said rollers.

4. Conveying device according to Claim 3, characterised in that each roller (19) has a concave biconical shape and comprises an end section (19a) of cylindrical shape arranged to rest against the continuous belt (22).

5. Conveying device according to one of the aforementioned claims, characterised in that:
- each carrier (3) comprises a plate (4) capable of lateral attachment to the conveyor (1, 2) and a substantially horizontal support arm (5), extending at a right angle to said plate and comprising a horizontal spindle (6) parallel to the conveyor (1, 2), said spindle being provided with a lug (7) at each of its ends,
- each carriage (8) comprises a plate (9) having a recessed rear face defining an upper edge, by means of which it comes to rest against plate (4) of the carrier (3), as well as two substantially horizontal cross-members (11) extending at a right angle to said plate, whereby an oblong recess (13) capable of accommodating a lug (7) is provided underneath each of them, the long axis of said recess being vertical.

6. Conveying device according to Claim 5, characterised in that it comprises two series of carriers (3) secured opposite one another on either side of the conveyor (1, 2).

7. Conveying device according to one of the aforementioned claims, characterised in that:
- each carriage (8) comprises four support shoes (15-18) distributed laterally and longitudinally underneath said carriage, said shoes being offset transversely in relation to one another,
- the weighing means comprise four slides (23-26), each of them disposed in alignment with a shoe (15-18), said slides being provided with weighing zones (27-30) so disposed as to support said support shoes simultaneously.

8. Conveying device according to one of the aforementioned claims, characterised in that the tipping means comprise:
- an eccentric (32) provided with an access ramp and disposed parallel to the conveyor (1, 2),
- for each carriage (8) an end piece (14) projecting underneath said carriage and so arranged as to pass laterally along the eccentric (32),
- and switching means (33, 34) capable of deflecting the path of the end pieces (14) of the carriages (8) and of guiding them onto the access ramp of eccentric (32).

9. Conveying device according to Claim 8, characterised in that the switching means comprise a lever (33) provided with an upper face matching the access ramp of eccentric (32) and means (34) for pivoting said lever between a position in which it is at a distance from the eccentric (32) so that the end pieces (14) of carriages (8) can pass and a position in which it abuts the eccentric (32) in the path of said end pieces.

10. Conveying device according to Claim 9, characterised in that the pivoting means comprise an electro-magnet (34) provided with a spindle of rotation carrying the lever (33).

11. Conveying device according to one of Claims 8 to 10, characterised in that it comprises a support element (35) disposed parallel to the eccentric (32) so that the end (19a) of the rollers (19) comes to rest on said element when the carriages (8) are tipped by said eccentric.

## Patentansprüche

1. Fördereinrichtung für Produkte, insbesondere Früchte, geeignet zum Sortieren der besagten Produkte im Einklang mit vorbestimmten Auswahlkriterien, der Art, die folgende Teile umfaßt:
- einen Förderer (1, 2) zum Transport der Produkte, wobei dieser mit einer Zone (21) zum Laden der besagten Produkte versehen ist,
- eine Mehrzahl von sich frei um ihre Achsen drehenden Rollen (19), die entlang des Förderers (1, 2) verteilt und im Verhältnis zu der Laufrichtung des besagten Förderers quer angeordnet sind, wobei je zwei aneinander anschließende Rollen (19) gemeinsam einen Sitz für ein Produkt abgrenzen,
- Abstützmittel (3, 8) für die Rollen (19), wobei die besagten Abstützmittel so beschaffen sind, daß sie Schwingung in einer senkrechten Ebene und seitliches Kippen der besagten Rollen gestatten und eine Mehrzahl von entlang des Förderers (1, 2) verteilten Trägern (3) umfassen und eine sich parallel zu dem besagten Förderer erstreckende waagerechte Spindel (6) aufweisen,
- Wägemittel (23-31), die so beschaffen sind, daß sie das Messen des Gewichtes der durch die Rollen (19) abgestützten Produkte gestatten,
- und Kippmittel (32-34), die so beschaffen sind, daß sie auf selektive Weise das Kippen von zwei aufeinanderfolgenden Rollen bewirken, um das zwischen den besagten Rollen befindliche Produkt zu entladen; wobei die besagte Fördereinrichtung dadurch gekennzeichnet ist,
- daß die Rollenabstützmittel (19) einen durch den jeweiligen Träger (3) abgestützten Förderwagen (8) mit zwei Rollen (19) umfassen, die gemeinsam einen Sitz für ein Produkt abgrenzen, wobei jeder der besagten Förderwagen:
* an der Spindel (6) eines Trägers (3) angeordnet ist, so daß er im Verhältnis zu dem besagten Träger senkrecht schwingbar und seitlich kippbar ist,
* Abstützschuhe (15-18) umfassen, die mindestens eine waagerechte Gleitebene abgrenzen;
- daß die Wägemittel Gleitbahnen (23-26) umfassen, von denen jede mit einem Abstützschuh (15-18) der Förderwagen (8) ausgerichtet ist, und zwar sind die besagten Gleitbahnen mit einer Endrampe versehen, die so beschaffen ist, daß sie Aufwärtsverlagerung der Förderwagen (8) im Verhältnis zu deren Trägern (3) bewirkt, sowie mit Wägezonen (27-31) der besagten Förderwagen,
- daß Trennmittel (20, 22) so beschaffen sind, daß sie im Bereiche der Produktladezone (21) eine geordnete Anordnung der besagten Produkte bewirken, die es gestattet, jedes davon auf einen Förderwagen (8) abzusetzen.

2. Fördereinrichtung nach Anspruch 1, dadurch gekennzeichnet,
- daß sich der Förderer (1, 2) im Bereiche seiner Ladezone entlang einer aufwärtsgeneigten Rampe (21) erstreckt,
- daß die Trennmittel folgende Teile umfassen:
. für jeden Förderwagen (8) eine Zwischenrolle (20), die zu den Rollen (19) parallel und so angeordnet ist, daß sie sich zwischen den Paaren von Rollen (19) von zwei aufeinanderfolgenden Förderwagen (8) erstreckt,
. Mittel (22) für drehenden Antrieb der Rollen (19), wobei die besagten Mittel entlang der Ladezone (21) angeordnet und so beschaffen sind, daß sie die besagten Rollen in umgekehrter Richtung zu der Laufrichtung des Förderers (1, 2) drehend antreiben, und zwar mit einer linearen Drehgeschwindigkeit, die höher ist als die des besagten Förderers.

3. Fördereinrichtung nach Anspruch 2, dadurch gekennzeichnet, daß die Mittel für drehenden Antrieb der Rollen (19) ein endloses Band (22) umfassen, das so angeordnet ist, daß es mit den besagten Rollen in Kontakt kommt.

4. Fördereinrichtung nach Anspruch 3, dadurch gekennzeichnet, daß jede Rolle (19) eine doppelkonische konkave Form aufweist und einen Endabschnitt (19a) zylindrischer Form umfaßt, der so beschaffen ist, daß er auf dem endlosen Band (22) ruht.

5. Fördereinrichtung nach einem der vorstehenden Ansprüche, dadurch gekennzeichnet,
- daß jeder Förderwagen (3) eine Platte (4) umfaßt, die so beschaffen ist, daß sie sich seitlich an den Förderer (1, 2) anbringen läßt, sowie einen im wesentlichen waagerechten Abstützarm (5), der sich im Verhältnis zu der besagten Platte im rechten Winkel erstreckt und eine zu dem Förderer (1, 2) parallele waagerechte Spindel (6) umfaßt, wobei die besagte Spindel an jedem ihrer Enden einen Vorsprung (7) aufweist,
- daß jeder Förderwagen (8) eine Platte (9) mit einer ausgesparten hinteren Fläche umfaßt, die einen oberen Rand abgrenzt, mit dem sie an der Platte (4) des Förderwagens (3) zur Auflage gelangt, sowie zwei im wesentlichen waagerechte Querträger (11), die sich im Verhältnis zu der besagten Platte senkrecht erstrecken, wobei unterhalb jedes der besagten Querträger eine längliche Öffnung (13) vorgesehen ist, deren Längsachse senkrecht steht und die in der Lage ist, einen Vorsprung (7) aufzunehmen.

6. Fördereinrichtung nach Anspruch 5, dadurch gekennzeichnet, daß sie zwei Reihen von zu beiden Seiten des Förderers (1, 2) einander gegenüber angeordneten Trägern (3) umfaßt.

7. Fördereinrichtung nach einem der vorstehenden Ansprüche, dadurch gekennzeichnet,
- daß jeder Förderwagen (8) vier Abstützschuhe (15-18) umfaßt, die seitlich und der Länge nach unterhalb des besagten Förderwagens verteilt sind, wobei die besagten Schuhe im Verhältnis zueinander in Querrichtung versetzt sind,
- daß die Wägemittel vier Gleitbahnen (23-26) umfassen, von denen jede mit einem der Schuhe (15-18) fluchtend angeordnet ist, wobei die besagten Gleitbahnen mit Wägezonen (27-30) versehen sind, die so angeordnet sind, daß sie die besagten Abstützschuhe gleichzeitig abstützen.

8. Fördereinrichtung nach einem der vorstehenden Ansprüche, dadurch gekennzeichnet, daß die Kippmittel folgende Teile umfassen:
- ein Kurventeil (32), das mit einer Zufahrtsrampe versehen und im Verhältnis zu einem Förderer (1, 2) parallel angeordnet ist,
- für jeden Förderwagen (8) ein Endteil (14), das unterhalb des besagten Förderwagens vorsteht und so angeordnet ist, daß es sich seitlich entlang des Kurventeils (32) bewegt,
- und Schaltmittel (33, 34), die in der Lage sind, die Bahn der Endteile (14) der Förderwagen (8) zu ändern und sie auf die Zufahrtsrampe des Kurventeils (32) zu führen.

9. Fördereinrichtung nach Anspruch 8, dadurch gekennzeichnet, daß die Schaltmittel einen Hebel (33) mit einer zu der Zufahrtsrampe des Kurventeils (32) passenden oberen Fläche umfassen, sowie Mittel (34) zum Schwenken dieses Hebels zwischen einer Lage, in der er von dem Kurventeil (32) entfernt ist, so daß die Endteile (14) der Förderwagen (8) passieren können, und einer Lage, in der er an dem Kurventeil (32) auf der Bahn der besagten Endteile anliegt.

10. Fördereinrichtung nach Anspruch 9, dadurch gekennzeichnet, daß die Schwenkmittel einen Elektromagneten (34) umfassen, der mit einer den Hebel (33) tragenden Drehspindel versehen ist.

11. Fördereinrichtung nach einem der Ansprüche 8 bis 10, dadurch gekennzeichnet, daß sie ein Abstützelement (35) umfaßt, das parallel zu dem Kurventeil (32) angeordnet ist, so daß sich das Ende (19a) der Rollen (19) an das besagte Element anlegt, wenn die Förderwagen (8) durch das besagte Kurventeil gekippt werden.
